Europäisches Patentamt

European Patent Office

Office européen des brevets

(11) Numéro de publication : **0 368 730 B1**

(12) # FASCICULE DE BREVET EUROPEEN

(45) Date de publication du fascicule du brevet :
**18.03.92 Bulletin 92/12**

(51) Int. Cl.⁵ : **F16F 3/10, B60G 25/00**

(21) Numéro de dépôt : **89403034.5**

(22) Date de dépôt : **03.11.89**

(54) **Support élastique à raideurs anisotropes, notamment pour la suspension de carrosseries.**

(30) Priorité : **09.11.88 FR 8814638**

(43) Date de publication de la demande :
**16.05.90 Bulletin 90/20**

(45) Mention de la délivrance du brevet :
**18.03.92 Bulletin 92/12**

(84) Etats contractants désignés :
**BE DE ES GB IT LU NL SE**

(56) Documents cités :
**EP-A- 0 183 197
DE-C- 683 167
DE-C- 732 016
FR-A- 1 391 349
FR-A- 2 243 371**

(73) Titulaire : **HUTCHINSON
2 rue Balzac
F-75008 Paris (FR)**

(72) Inventeur : **Simon, Jean-Michel
86 Rue de Chatillon
F-92140 Clamart (FR)**
Inventeur : **Tanière, Jacques
Le Gué Vaslin
F-28200 Châteaudun (FR)**
Inventeur : **Ciolczyk, Jean-Pierre
Résidence Dunois 11 Rue Emile Zola
F-45200 Montargis (FR)**
Inventeur : **Domer, Michel
La Cour aux Fleurs Pouilly
F-60790 Valdampierre (FR)**

(74) Mandataire : **Picard, Jean-Claude Georges et al
Cabinet Plasseraud 84, rue d'Amsterdam
F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un support élastique à raideurs anisotropes, notamment pour la suspension de carrosseries de véhicules, en particulier au niveau de la traverse du train arrière.

Dans ce type d'application on cherche à obtenir un support présentant une très forte anisotropie dans les directions de ses trois axes orthogonaux x, y et z. En particulier, on cherche à obtenir :

– une très grande raideur $K_y$ dans la direction transversale du véhicule, ou axe des y, à savoir une raideur de l'ordre de 10 000 N/mm, ceci pour éviter un déplacement latéral de la carrosserie par rapport aux roues en virage ;

– une très faible raideur $K_x$ dans la direction longitudinale du véhicule, ou axe des x, à savoir une raideur de l'ordre de 50 N/mm, ceci pour diminuer au maximum les bruits de roulement du véhicule ($K_y/K_x$ de l'ordre de 200) ;

– une raideur $K_z$ moyenne en direction verticale (direction principale de la charge) ou axe des z, à savoir une raideur de l'ordre de 750 N/mm.

Bien entendu, toutes ces valeurs sont fournies à titre purement indicatif.

Jusqu'à présent, on a eu beaucoup de difficultés à obtenir la grande anisotropie souhaitée, et en particulier le rapport précité de 200 entre les raideurs transversale et longitudinale, même avec des plots élastiques lamifiés caoutchouc/métal. Un support élastique à raideur anisotrope est connu du document DE-C-683 167.

Le but de la présente invention est de résoudre ce problème et, à cet effet, elle consiste à établir un support comportant d'une part un élément élastique principal destiné à supporter la charge et d'autre part des moyens de fixation de cet élément élastique respectivement à deux ensembles entre lesquels le support doit être intercalé, ce support étant tel qu'il comporte comme élément élastique principal au moins une poutre s'étendant dans ladite direction transversale, les extrémités de cette poutre étant solidarisées avec une très grande raideur à une première armature propre à être fixée à l'un desdits ensembles et sa partie médiane étant solidarisée avec une très grande raideur à une seconde armature propre à être fixée à l'autre ensemble, la section transversale de cette poutre ayant une forme telle qu'au niveau de ladite seconde armature elle présente de part sa resitance à la flexion les raideurs voulues, respectivement dans la direction longitudinale (axe des x) et dans la direction de la charge principale (axe des z).

On comprend qu'en choisissant judicieusement les dimensions, dans les directions x et z respectivement, de la section transversale de la poutre, on pourra lui conférer, au niveau de ladite seconde armature, les modules de résistance à la flexion voulus, et donc conférer à l'ensemble du support les raideurs anisotropes voulues, étant donné par ailleurs que la grande ou très grande raideur dans la direction transversale (axe des y) sera facile à obtenir, la poutre travaillant dans cette direction en traction ou en compression, sans flambage, et présentant naturellement une très grande raideur selon cet axe.

Il va de soi que l'on peut donner à la section transversale de la poutre des formes variées (rectangulaires, elliptiques, etc), dès lors que l'on obtient, par le choix de la proportion de leurs dimensions, le rapport voulu entre les raideurs en x et en z.

Pour faciliter le réglage, notamment de la raideur en z, on peut même envisager de pourvoir la poutre d'un évidement central diminuant le module d'élasticité à la flexion vis-à-vis des efforts s'exerçant dans cette direction.

On peut aussi prévoir d'utiliser plusieurs poutres par support, en principe disposées parallèlement l'une à l'autre et/ou dans le prolongement l'une de l'autre, et pouvant être identiques.

Dans ce cas, le flambage des poutres peut être facilement évité par fixation d'un bloc d'élastomère, par exemple, entre les poutres de chaque paire.

Quelles que soient la forme et la disposition des poutres, il sera avantageux en outre d'utiliser pour leur constitution des matériaux composites, à base de fibres de verre, carbone ou fibres résistantes analogues, enrobées d'une résine synthétique polymérisée.

On peut aussi envisager de constituer les poutres à partir de joncs de fibres résistantes enrobées d'une résine synthétique polymérisée, ces joncs, établis sous forme de faisceaux de joncs parallèles, axés dans la direction transversale, étant noyés dans une matrice de matière élastomère.

Cette matière élastomère peut servir d'amortisseur des vibrations auxquelles les poutres peuvent être soumises, en même temps que d'enveloppe protectrice protégeant les poutres des agents extérieurs (gravillons, humidité).

Quant aux faisceaux de joncs parallèles, on comprendra que dans ce cas ils travailleront surtout à la traction, leurs extrémités devant donc être pincées au niveau des moyens de liaison entre les poutres et les armatures.

Les matériaux composites sont particulièrement intéressants dans l'application visée, du fait de leur grande capacité d'allongement, mais il est également possible de concevoir les mêmes structures avec de l'acier à ressort.

Quel que soit le matériau constituant les poutres et quelle que soit leur structure, il sera toujours avantageux de les enrober dans une enveloppe protectrice en élastomère semblable à celle mentionnée plus haut pour les poutres à faisceaux de joncs, ceci pour la protection contre l'environnement et le réglage de l'amortissement, comme déjà indiqué, et également pour assurer commodément la liaison avec les pièces métalliques des armatures.

Quant aux moyens de fixation de l'élément élastique principal que constituent la ou les poutres aux ensembles entre lesquels le support doit être intercalé, ils pourront être de toute constitution appropriée, dès lors qu'ils ne modifient pas de façon sensible le comportement des poutres vis-à-vis des efforts et qu'ils assurent une liaison fiable, sans vibrations, avec les armatures.

De tels moyens, ainsi que différentes constitutions de poutres seront mieux vus à la lecture des exemples de réalisation donnés maintenant, à titre nullement limitatif, avec référence aux figures du dessin annexé dans lequel :

– la figure 1 est une vue en perspective d'un premier mode de réalisation d'un support conforme à l'invention ;

– la figure 2 montre, en coupe horizontale selon la ligne II-II de la figure 3, une variante de support à plusieurs poutres ;

– la figure 3 est une vue en coupe selon la ligne III-III de la figure 2 ;

– la figure 4 est une vue en coupe transversale d'une poutre selon encore un autre mode de réalisation ;

– la figure 5 est une vue en coupe selon la ligne V-V de la figure 6, montrant encore une autre variante de poutre conforme à l'invention ;

– la figure 6 est une vue en coupe selon la ligne VI-VI de la figure 5 ; et

– la figure 7 est une vue en coupe verticale partielle, au niveau des inserts extrêmes, montrant une variante de détail.

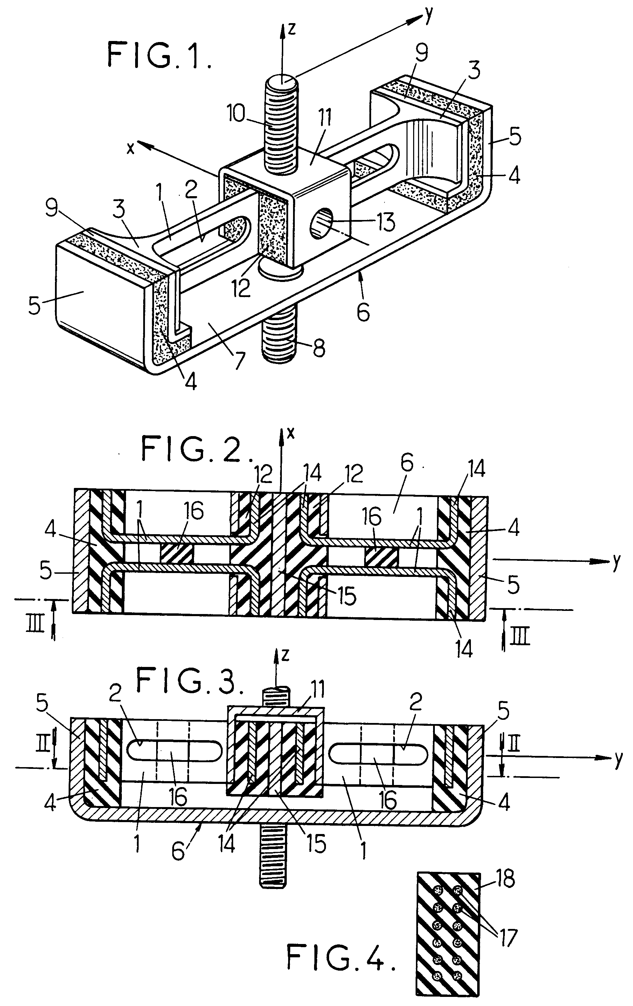

A la figure 1, la poutre du support a été référencée 1 ; elle est en matériau composite et possède centralement un évidement longitudinal et central 2, s'étendant entre les pieds d'extrémité 3. Les directions principales dans lesquelles cette poutre aura à travailler ont été représentées par les axes x, y et z. Dans le cas d'un support utilisé sur traverse arrière de véhicule, il est rappelé que x représente la direction longitudinale du véhicule, dans laquelle le support devra présenter la plus faible raideur ; y est la direction transversale (direction de la traverse arrière du véhicule), dans laquelle il devra présenter une très grande raideur, et z la direction verticale, dans laquelle la raideur devra être intermédiaire. C'est essentiellement le rapport entre cette dernière raideur et la raideur longitudinale que le choix de la forme et des dimensions de la section transversale de la poutre permettra de régler, de la manière indiquée plus haut.

Dans la direction transversale y, la poutre 1 pouvant, en première approximation et en absence de flambage, être considérée comme ayant une raideur extrêmement grande et en tout cas supérieure à celle qui est souhaitée, la raideur du support dans cette direction dépendra essentiellement du degré d'encastrement des extrémités de la poutre, et c'est donc celui-ci qui aura à être réglé.

Dans le cas d'une poutre travaillant en compression comme celle de la figure 1, c'est surtout par le choix de l'épaisseur de blocs d'élastomère 4 intercalés et adhérisés entre des coussinets métalliques 9 adhérisés aux pieds 3 de la poutre et les ailes 5 d'une première armature métallique en forme d'étrier 6, que l'on pourra donc régler cette raideur du support en direction transversale. En principe, cette épaisseur sera donc assez faible. Pour éviter un déversement des ailes 5 du fait des efforts tranversaux, elles peuvent être pourvues de raidisseurs extérieurs (non représentés). Par contre il n'y a pas besoin de raidir le fond 7 de l'armature 6, dans la mesure où ce fond ne peut flamber, étant en appui sur la traverse du véhicule (non représentée) et lui étant fixé, par l'intermédiaire d'une vis ou analogue 8.

La seconde armature, apte à être fixée à la carrosserie du véhicule, par une vis ou analogue 10, a été référence 11 et peut aussi être constituée d'un étrier métallique, coiffant la partie médiane de la poutre 1. La solidarisation entre cette dernière et l'armature 11 peut être assurée par des blocs d'élastomère adhérisés 12 et/ou par un boulonnage (trou 13). Un tel boulonnage peut également être utilisé aux extrémités de la poutre, notamment pour le cas où elle travaillerait en traction.

Il est à noter que sur les figures 1 à 3 on n'a pas représenté l'enrobage d'élastomère de protection des poutres, pour ne pas alourdir le dessin.

Aux figures 2 et 3, on utilise quatre poutres identiques en matériau composite, encore référencées 1, disposées en deux paires de poutres parallèles, les deux paires étant alignées. On voit que chaque poutre 1 a, vue en plan, une forme en U, avec centralement un évidement longitudinal 2. Les ailes terminales 14 des poutres servent à leur ancrage dans des blocs d'élastomère de liaison aux armatures, à savoir des blocs 4 extrêmes adhérisés aux ailes 5 d'une première armature métallique 6, et des blocs centraux 12 adhérisés entre les ailes d'un étrier métallique 11, constituant la seconde armature, et une plaque médiane 15.

En 16 on a représenté des blocs d'élastomère adhérisés entre les deux poutres de chaque paire et permettant d'éliminer le risque de flambage.

Enfin on a représenté à la figure 4 la coupe transversale d'un autre type de poutre, constituée de joncs de fibres résistantes 17 enrobées d'une résine synthétique polymérisée, ces joncs, établis sous forme de faisceaux de joncs parallèles, axés dans la direction transversale, étant noyés dans une matrice de matière élastomère 18. En principe, une telle poutre travaillerait en traction, les extrémités des joncs étant pincées, comme indiqué plus haut.

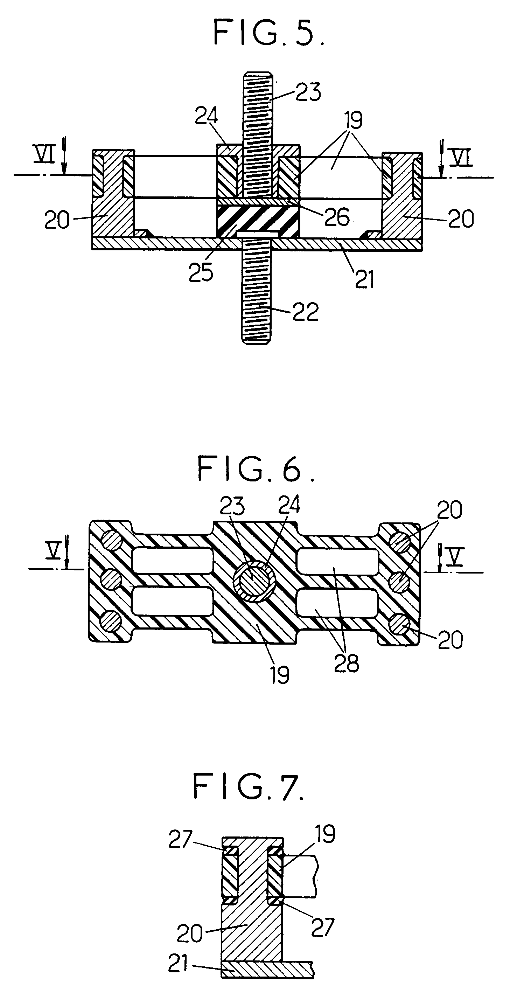

Aux figures 5 et 6, on a montré encore une autre forme possible de poutre multiple, laquelle est réalisée par exemple en matière thermo-plastique, renforcée par des fibres résistantes ; elle peut donc être réalisée par injection dans un moule. Les moyens de fixation des extrémités de cette poutre, référencée 19, à l'ensemble correspondant, comprennent des inserts 20, avantageusement métalliques, disposés préalablement dans ledit moule, aux emplacements appropriés. Après démoulage, les inserts 20 équipant la poutre sont reliés, par exemple par soudage, à une platine ou armature de fixation 21 dont est solidarisée la vis de fixation correspondante 22, assurant la liaison rigide avec l'ensemble précité.

Quant à la liaison entre la vis de fixation 23 assurant la solidarisation rigide à l'autre ensemble, et la partie centrale de la poutre 19, elle peut être réalisée par l'intermédiaire d'un insert métallique creux de transfert de charge, référencé en 24. L'élasticité souhaitée selon l'axe des z peut être obtenue par la poutre et/ou par un coussinet de caoutchouc 25 adhérisé entre la platine 21 et une plaque 26 solidaire de l'insert 24.

La figure 7 montre une variante, selon laquelle l'élasticité souhaitée en z peut être obtenue, à chaque extrémité de la poutre 19, par des rondelles de caoutchouc 27 intercalées entre la poutre et des épaulements des inserts 20.

Enfin, il y a lieu de noter que les évidements 28 de la poutre 19, visibles sur la figure 6, peuvent être remplis totalement ou partiellement par un élastomère d'amortissement.


## Revendications

1. Support élastique à raideurs anisotropes, notamment pour la suspension de carrosseries d'un véhicule s'étendant dans une direction longitudinale, ce support comportant d'une part un élément élastique principal destiné à supporter la charge et devant avoir des raideurs différentes selon ses trois axes orthogonaux (x,y,z), et une raideur dans la direction transversale (axe des y) d'un ou de plusieurs ordres de grandeur supérieure à la raideur dans la direction longitudinale (axe des x), la raideur dans la direction de la charge principale (ou direction verticale, axe des z) pouvant être intermédiaire entre les deux précédentes, et d'autre part des moyens de fixation de cet élément élastique respectivement à deux ensembles entre lesquels le support doit être intercalé, le support étant tel qu'il comporte comme élément élastique principal au moins une poutre (1) s'étendant dans ladite direction transversale (y), les extrémités (3) de cette poutre (1) étant solidarisées avec une très grande raideur à une première armature (6) propre à être fixée à l'un desdits ensembles et sa partie médiane étant solidarisée avec une très grande raideur à une seconde armature (11) propre à être fixée à l'autre ensemble, la section transversale de cette poutre (1) ayant une forme telle qu'au niveau de ladite seconde armature (11) elle présente de part sa raideur sa résistance à la flexion les raideurs voulues, respectivement dans la direction longitudinale (axe des x) et dans la direction de la charge principale (axe des z).

2. Support selon la revendication 1, caractérisé en ce que ladite poutre (1) est pourvue d'un évidement central (2).

3. Support selon la revendication 1 ou 2, caractérisé en ce qu'il comporte plusieurs poutres (1) en principe disposées parallèlement l'une à l'autre et/ou dans le prolongement l'une de l'autre, et pouvant être identiques.

4. Support selon la revendication 3, caractérisé en ce qu'un bloc d'élastomère (16) est fixé entre les poutres (1) de chaque paire.

5. Support selon l'une quelconque des revendications précédentes, caractérisé en ce que les poutres (1) sont constituées d'un matériau composite, à base de fibres de verre, carbone ou fibres résistantes analogues, enrobées d'une résine synthétique polymérisée.

6. Support selon l'une quelconque des revendications 1 à 4, caractérisé en ce que les poutres (1) sont constituées d'acier à ressort.

7. Support selon l'une quelconque des revendications précédentes, caractérisé en ce que les poutres (1) sont enrobées dans une enveloppe protectrice en matière élastomère.

8. Support selon l'une quelconque des revendications 1 à 5 caractérisé en ce que les poutres (1) sont constituées à partir de joncs de fibres résistantes (17) enrobées d'une résine synthétique polymérisée, ces joncs, établis sous forme de faisceaux de joncs parallèles, axés dans la direction transversale, étant noyés dans une matrice de matière élastomère (18).

9. Support selon l'une quelconque des revendications précédentes, caractérisé en ce que lesdits moyens de fixation comprennent d'une part ladite première armature (6), laquelle a la forme d'un étrier en U entre les ailes (5) duquel et les extrémités (3) de la poutre (1) sont intercalés et fixés des blocs d'élastomère (4) de faible épaisseur, et d'autre part ladite seconde armature (11), ayant également la forme d'un étrier en U, lequel coiffe la partie médiane de la poutre (1) avec interposition de blocs d'élastomère (12).

10. Support selon l'une quelconque des revendications précédentes, caractérisé en ce que les poutres (1) ont une forme en U dont les ailes extrêmes (14) servent à assurer l'ancrage dans des blocs d'élastomère (4,12) de liaison aux première (6) et seconde (11) armatures.

11. Support selon la revendication 9 ou 10, caractérisé en ce que la solidarisation entre les poutres (1) et les armatures (6,11) est assurée par adhérisation des blocs d'élastomère respectifs (4,12) et/ou par boulonnage.

12. Support selon la revendication 1, caractérisé en ce qu'il comprend au moins une poutre (19) en matière thermo-plastique, laquelle est équipée, de moulage, d'inserts (20,24) faisant partie des moyens de fixation aux ensembles respectifs.

13. Support selon la revendication 12, caractérisé en ce que la poutre (19) est armée de fibres résistantes.

## Patentansprüche

1. Elastisches Lager mit anisotropen Steifigkeiten, insbesondere für sich in Längsrichtung erstreckende Karosserieaufhängungen eines Fahrzeuges, die einerseits ein elastisches Hauptelement, das dazu dient, die Belastung abzustützen und unterschiedliche Steifigkeiten in Richtung seiner drei orthogonalen Achsen (x y z) und eine Steifigkeit in Richtung der querverlaufenden Achse (y) aufweisen muß, die eine oder mehrere Größenordnungen höher liegt, als die Steifigkeit in Richtung der Längsachse (x), wobei die Steifigkeit in Richtung der Hauptbelastung (oder in der senkrechten Richtung der Achse z) zwischen den beiden vorstehenden Werten liegt und andererseits Einrichtungen zur Befestigung des elastischen Elementes an zwei Teilen enthält, zwischen denen das Lager eingefügt werden muß, wobei das Lager so ausgebildet ist, daß es als elastisches Hauptelement wenigstens einen Träger (1) enthält, der sich in Richtung der querverlaufenden Achse (y) erstreckt, die Enden (3) des Trägers (1) mit sehr großer Steifigkeit an einer ersten Armatur (6) befestigt sind, die an einem der Teile angebracht werden kann und sein mittlerer Abschnitt mit sehr großer Festigkeit an einer zweiten Armatur (11) befestigt ist, die an dem anderen Teil angebracht werden kann und der Querschnitt des Trägers (1) so geformt ist, daß er in Höhe der zweiten Armatur (11) abgesehen von seiner Biegefestigkeit, die gewünschten Steifigkeiten in Richtung der in Längsrichtung verlaufenden Achse (x) und in Richtung der Hauptbelastung entsprechend der Achse (z) aufweist.

2. Lager nach Anspruch 1, dadurch gekennzeichnet, daß der Träger (1) mit einer mittleren Ausnehmung (2) versehen ist.

3. Lager nach Anspruch 1 oder 2, dadurch gekennzeichnet, daß es mehrere Träger (1) enthält, die im Prinzip parallel zueinander und/oder in ihrer gegenseitigen Verlängerung angeordnet sind und identisch sein können.

4. Lager nach Anspruch 3, dadurch gekennzeichnet, daß zwischen den Trägers (1) jedes Paares ein Block (16) aus elastomerem Material angeordnet ist.

5. Lager nach einem der vorhergehenden Ansprüche, dadurch gekennzeichnet, daß die Träger (1) aus einem zusammengesetzten Material auf der Basis von Glas- oder Kohlenstaffasern oder anderen widerstandsfähigen Fasern bestehen, die mit einem polymerisierten Kunstharz umhüllt sind.

6. Lager nach einem der vorhergehenden Ansprüche 1 bis 4, dadurch gekennzeichnet, daß die Träger (1) aus Federstahl bestehen.

7. Lager nach einem der vorhergehenden Ansprüche, dadurch gekennzeichnet, daß die Träger (1) mit einem Schutzüberzug aus einem elastomeren Material umhüllt sind.

8. Lager nach einem der vorhergehenden Ansprüche 1 bis 5, dadurch gekennzeichnet, daß die Träger (1) aus Stangen aus widerstandsfähigen Fasern (17) bestehen, die mit einem polymerisierten Kunstharz umhüllt sind, wobei die Stangen, die in Form von Bündeln mit parallelen, in Querrichtung ausgerichteten Stangen ausgebildet sind, in eine Matrix (18) aus elastomerem Material eingebettet sind.

9. Lager nach einem der vorhergehenden Ansprüche, dadurch gekennzeichnet, daß die Befestigungseinrichtungen einerseits aus der ersten Armatur (6), die die Form eines U-förmigen Steigbügels hat, zwischen dessen Schenkeln (5) und den Endabschnitten (3) des Trägers (1) Blöcke (4) aus elastomeren Material mit geringer Stärke eingefügt und befestigt sind, und andererseits aus der zweiten Armatur (11) bestehen, die ebenfalls die Form eines U-förmigen Steigbügels hat, der den mittleren Abschnitt des Trägers (1) unter Einfügen von Blöcken (12) aus elastomerem Material überdeckt.

10. Lager nach einem der vorhergehenden Ansprüche, dadurch gekennzeichnet, daß die Träger die Form eines U haben, dessen äußere Schenkel (14) dazu dienen, die Verankerung in den aus elastomerem Material bestehenden Blöcken (4, 12) der Verbindung an der ersten Armatur (6) und der zweiten Armatur sicherzustellen.

11. Lager nach Anspruch 9 oder 10, dadurch gekennzeichnet, daß die Befestigung zwischen den Trägern (1) und den Armaturen (6, 11) durch Ankleben der Blöcke (4, 12) aus elastamerem Material und-/oder durch Verschrauben erfolgt.

12. Lager nach Anspruch 1, dadurch gekennzeichnet, daß es wenigstens einen Träger (19) aus thermoplastischem Material enthält, der durch Verformung hergestellt und mit Einlagen (20, 24) versehen ist, die Bestandteil der Mittel zur Anbringung an den entsprechenden Teilen sind.

13. Lager nach Anspruch 12, dadurch gekennzeichnet, daß der Träger (19) mit Fasern aus widerstandsfähigem Material armiert ist.

## Claims

1. Elastic mount with anisotropic stiffnesses, notably for the suspension of vehicle bodies lying in a longitudinal direction, this support having on the one hand a main elastic member designed to support the load and having to have different stiffnesses along its three orthogonal axes (x, y, z) and a stiffness in the transverse direction (y axis) one or more orders of magnitude greater than the stiffness in the longitudinal direction (x axis), the stiffness in the direction of the principal load (or vertical direction, z axis) being able to be intermediate between the two preceding ones, and on the other hand means of fixing this elastic member respectively to two assemblies between which the mount has to be interposed, the mount being such that it has, as a main elastic member, at least one beam (1) lying in the said transverse direction (y), the ends (3) of this beam (1) being secured with a very high degree of stiffness to a first frame (6) suitable for being fixed to one of the said assemblies and its middle part being secured with a very high degree of stiffness to a second frame (11) suitable for being fixed to the other assembly, the cross section of this beam (1) having a shape such that at the said second frame (11) it has, because of its bending strength, the desired stiffnesses, respectively in the longitudinal direction (x axis) and in the direction of the principal load (z axis).

2. Mount according to claim 1, characterised in that the said beam (1) has a central cut-out (2).

3. Mount according to claim 1 or 2, characterised in that it has several beams (1) in general arranged parallel to each other and/or in line with each other, and which may be identical.

4. Mount according to claim 3, characterised in that an elastomer block (16) is fixed between the beams (1) of each pair.

5. Mount according to any one of the preceding claims, characterised in that the beams (1) are made from a composite material, based on glass or carbon fibres or similar strong fibres, coated in a polymerised synthetic resin.

6. Mount according to any one of claim 1 to 4, characterised in that the beams (1) ere made from spring steel.

7. Mount according to any one of the preceding claims, characterised in that the beans (1) are covered with a protective cladding made from elastomer material.

8. Mount according to any one of claims 1 to 5, characterised in that the beams (1) are made up from strands of strong fibres (17) coated in a polymerised synthetic resin, these strands, made up in the form of bundles of parallel strands, oriented in the transverse direction, being embedded in a matrix of elastomer material (18).

9. Mount according to any one of the preceding claims, characterised in that the said fixing means comprise on two one hand the said first frame (6), which is in the form of a U-shaped stirrup between the flanges (5) of which and the ends (3) of the bean (1) thin elastomer blocks (4) are interposed and fixed, and on the other hand the said second frame (11), also having the form of a U-shaped stirrup, which sits on tog of the middle part of the beam (1) with the interposition of elastomer blocks (12).

10. Mount according to any one of the preceding claims, characterised in that the beams (1) are in the form of a U, the end flanges (14) of which serve to provide the anchoring in the elastomer blocks (4, 12) for connecting to the first (6) and second (11) frames.

11. Mount according to claim 9 or 10, characterised in that the connection between the beams (1) and the frames (6, 11) in provided by bonding of the respective elastomer blocks (4, 12) and/or by bolting.

12. Mount according to claim 1, characterised in that it comprises at least one beam (19) made from thermoplastic material, which is provided, by moulding, with inserts (20, 24) forming part of the means of fixing to the respective assemblies.

13. Mount according to claim 12, characterised in that the beam (19) is reinforced with strong fibres.

FIG.1.

FIG.2.

FIG.3.

FIG.4.

# FIG.5.

# FIG.6.

# FIG.7.